# EUROPÄISCHE PATENTANMELDUNG

(11) **EP 4 840 727 A1**
(43) Veröffentlichungstag der Anmeldung: **18.11.2026**
(21) Anmeldenummer: 25176577.2
(22) Anmeldetag: 15.05.2025
(51) Int. Cl.: B62D 25/08, B62D 29/00

(54) **STRUKTURBAUTEIL MIT METAMATERIAL**

(71) Anmelder: GF Casting Solutions AG, 8201 Schaffhausen (CH)
(72) Erfinder: Gunia, Marc, 8200 Schaffhausen (CH); Rothenberg, Sebastian, 8048 Zürich (CH); Tunzini, Sabine, 8261 Hemishofen (CH); Selbach, Gabriel, 79804 Dogern (DE); Weiss, Johannes, 71067 Sindelfingen (DE); Sangiuliano, Luca, 20126 Milano (IT); Antonacci, Marco, 20144 Milano (IT)
(74) Vertreter: Cohausz & Florack

(57) **Zusammenfassung**

Strukturbauteil (1) eines Kraftfahrzeugs zur Verbesserung des NVH-Verhaltens, wobei das Strukturbauteil (1) ein Metamaterial (2) aufweist, wobei das Strukturbauteil (2) als Druckgussbauteil ausgebildet ist, wobei das Metamaterial (2) im Druckgussbauteil integriert ist.

## Beschreibung

Die Erfindung betrifft ein Strukturbauteil eines Kraftfahrzeugs zur Verbesserung des NVH-Verhaltens, wobei das Strukturbauteil ein Metamaterial aufweist.

Für das Fahrerlebnis spielt die Akustik im Innenraum eines Kraftfahrzeugs eine grosse Rolle. Schwingungen die von unterschiedlichen Fahrzeugbauteilen, dem Motor wie auch der Umgebung her stammen, werden über die Fahrzeuge ins Innere geleitet und sind deutlich hörbar. Die Frequenz der Geräusche der abrollenden Reifen auf der Strasse liegen zwischen 200 und 250 Hz. Diese werden in heutigen Fahrzeugen mit zusätzlichen Dämmstoffen wie schweren Matten oder anderen Dämmmaterialien gedämpft. Dies wiederum bringt zusätzliches Gewicht, was Fahrzeugbauer vermeiden möchten.

Aus dem Stand der Technik sind auch Metamaterialen bekannt, die den entstehenden Geräuschen in Kraftfahrzeugen ebenfalls entgegenwirken sollen und ein angenehmes und möglichst lautloses Fahren ermöglichen sollen.

Die DE 10 2022 117 383 A1 offenbart ein Fahrzeugbauteil zur Absorption von Geräuschen, wobei die Oszillatorelemente auf eine Anregung, durch die wenigstens eine Eigenmode abgestimmt sind, wobei das Fahrzeugbauteil als Kunststoffspritzgussteil ausgebildet ist.

Die DE 10 2022 117 383 A1 offenbart jedoch kein Verfahren, das für metallische Strukturbauteile eines Fahrzeugs geeignet ist.

Die DE 10 2019 203 054 A1 offenbart eine Fahrzeugkomponente für ein Kraftfahrzeug aus zwei Bauteilen, wobei der Fahrzeugkomponente zumindest ein mechanisches Metamaterial zugeordnet ist, wobei das mechanische Metamaterial-Element durch einen additiven Materialauftrag gebildet ist.

Es ist Aufgabe der Erfindung ein Strukturbauteil eines Kraftfahrzeugs zur Verbesserung des NVH-Verhaltens vorzuschlagen, dass eine wirtschaftliche Herstellung bei einer hohen Stückzahl an Teilen ermöglicht.

Diese Aufgabe wird erfindungsgemäss dadurch gelöst, dass das Strukturbauteil als Druckgussbauteil ausgebildet ist, wobei das Metamaterial im Druckgussbauteil integriert ist.

Das erfindungsgemässe Strukturbauteil eines Kraftfahrzeugs dient der Verbesserung des NVH-Verhaltens. Das heisst, die Geräusche im Fahrzeug sollen reduziert werden, vor allem das Geräusch, das durch das Rollen der Räder auf den Strassen entstehen, das meist eine Frequenz im Bereich von 200 - 250 Hz aufweist. Um dies zu erreichen, weist das Strukturbauteil ein Metamaterial auf, vorzugsweise ein mechanisches Metamaterial. Das erfindungsgemässe Strukturbauteil ist als Druckgussbauteil ausgebildet, wobei das Metamaterial im Druckgussbauteil integriert ist. Das heisst, das Druckgussbauteil ist als einteiliges bzw. einstückiges Bauteil ausgebildet und beinhaltet zumindest bereichsweise ein Metamaterial. Es ist vorteilhaft, wenn es sich dabei um eine mechanisches Metamaterial handelt.

Es ist vorteilhaft, wenn das Strukturbauteil einen Grundkörper aus gegossenem Vollmaterial aus einem Basismaterial und integral anschliessenden Bereiche aus Metamaterial aufweist. Die integral anschliessenden Bereiche aus Metamaterial weisen als Basismaterial dasselbe Material auf wie das Vollmaterial des Grundkörpers auf.

Es ist vorteilhaft, wenn das Strukturbauteil aus einem Leichtmetall ausgebildet ist. Das heisst, dass der Grundkörper aus gegossenem Vollmaterial wie auch die integral angeordneten Bereiche aus Metamaterial aus einem Leichtmetall hergestellt sind. Vorzugsweise ist das Leichtmetall eine Aluminium- oder eine Magnesiumlegierung.

Als vorteilhaft hat sich gezeigt, wenn das Metamaterial Schwingungsdämpferelemente aufweist, wobei die Schwingungsdämpferelemente integral im Metamaterial und integral im Strukturbauteil angeordnet sind. Das Metadesign der Schwingungsdämpferelemente steuert gezielt die Ausbreitung von Wellen im Material. Vorzugsweise werden die Wellen derart gesteuert, dass die Schwingungen im Bereich von 200-250 Hz getilgt werden. Vorzugsweise ist jedes Schwingungsdämpferelement am Strukturbauteil identisch ausgebildet.

Es ist vorteilhaft, wenn die Schwingungsdämpferelemente aus demselben Basismaterial wie der Grundkörper ist.

Vorzugsweise sind die Schwingungsdämpferelemente in Feldern am Strukturbauteil angeordnet. Durch diese Felder werden Stoppbänder gebildet, die die Ausbreitung der Vibrationen verhindern. Die Felder bestehen vorzugsweise aus periodisch angeordneten Schwingungsdämpferelementen. Die periodisch angeordneten Schwingungsdämpferelemente sind vorzugsweise an einer planaren Fläche des Strukturbauteils angeordnet. Vorzugsweise erstrecken sich die periodisch angeordneten Schwingungsdämpferelemente über unterschiedliche Richtungen am Strukturbauteil.

Als vorteilhaft hat sich gezeigt, wenn das Schwingungselement ein Massenelement aufweist. Das Massenelement ist derart ausgelegt, dass die Vibrationen in einem bestimmten Frequenzbereich getilgt werden können.

Es ist vorteilhaft, wenn ein Luftspalt zumindest teilweise um das Massenelement verläuft und dadurch das Massenelement entlang des Luftspalts nicht mehr mit dem Grundkörper verbunden ist, wobei das Massenelement über mindestens ein Federelement mit dem Grundkörper verbunden ist. Dadurch wird ermöglicht, dass das Massenelement bei Vibrationen mitschwingen und die Schwingungen aufnehmen und tilgen kann. Als vorteilhaft hat sich gezeigt, wenn der Luftspalt sich durchgehend um das Massenelement erstreckt bis auf die Stellen bei denen das Federelement bzw. die Federelemente den Luftspalt durchqueren, um das Massenelement mit dem Grundkörper zu verbinden.

Vorzugsweise weist das Massenelement eine runde oder eckige Grundfläche auf. Es ist vorteilhaft, wenn das Massenelement die Oberfläche des Grundkörpers gering überragt und das Massenelement dicker als die Wandstärke des umgebenden Grundkörpers ausgebildet ist.

Als vorteilhafte Ausführungsform hat sich gezeigt, wenn das Massenelement als Rippenstruktur ausgebildet ist und die Rippenstruktur die Oberfläche des Grundkörpers überragt. Wobei die Rippenstruktur vorzugsweise als parallel aneinandergereihte Rippen, die untereinander verbunden sind, ausgebildet ist.

Vorzugsweise ist das Druckgussbauteil als dünnwandiges Strukturbauteil zugehörig zur Rohkarosserie (Body in white) oder Fahrgestell (Chassis), speziell bevorzugt als Federbeindom, lower dash, Spritzwand, bulkhead, Stirnwand, Schweller, Längsträger, Innentürrahmen, Unterboden oder Cockpitträger ausgebildet. Diese Strukturbauteile eignen sich ideal zur Herstellung im Druckgussverfahren und als Leichtmetallbauteil. Trotz der dünnwandigen Ausgestaltung aufgrund des Druckgussverfahrens erreichen die Bauteile die benötigte Steifigkeit wie auch die geforderte Elastizität. Mit der Integration des Metamaterials wird zudem noch die Vibrationsreduktion und damit die Geräuschreduktion erreicht.

Das erfindungsgemässe Verfahren zur Herstellung eines Strukturbauteils eines Kraftfahrzeugs zur Verbesserung des NVH-Verhaltens, das ein integral angeordnetes Metamaterial aufweist, wobei das Strukturbauteil mittels des Druckgussverfahrens hergestellt wird. Dies ermöglich das Einbringen eines Metamaterials aufgrund desselben Basismaterials wie der Grundköper ausgebildet ist.

Als vorteilhaft hat sich gezeigt, wenn in das Druckgussstrukturbauteil nach dem Ausformen aus der Gussform ein zumindest teileweise, das Massenelement umgebenden Luftspalt eingebracht wird. Bei komplexen Metamaterialen besteht die Möglichkeit, dass der Luftspalt nicht direkt beim Druckgiessen abgebildet wird, weshalb das Strukturbauteil noch nachgearbeitet wird. Vorzugsweise erfolgt das Einbringen der Luftspalten um die Massenelemente durch einen Laser oder durch Herausstanzen des Materials wie auch andere abtragende Verfahren denkbar sind.

Alle Ausgestaltungmöglichkeiten sind untereinander frei kombinierbar sowie zur Vermeidung von Wiederholungen sich die Merkmale der Vorrichtung auch automatisch auf das Verfahren und umgekehrt beziehen.

Ein Ausführungsbeispiel der Erfindung wird anhand der Figuren beschrieben, wobei sich die Erfindung nicht nur auf das Ausführungsbeispiel beschränkt. Es zeigen:
Fig. 1 eine dreidimensionale Ansicht eines erfindungsgemässen Strukturbauteils und
Fig. 2 -6 unterschiedliche Ausführungsform eines Schwingungsdämpferelements.

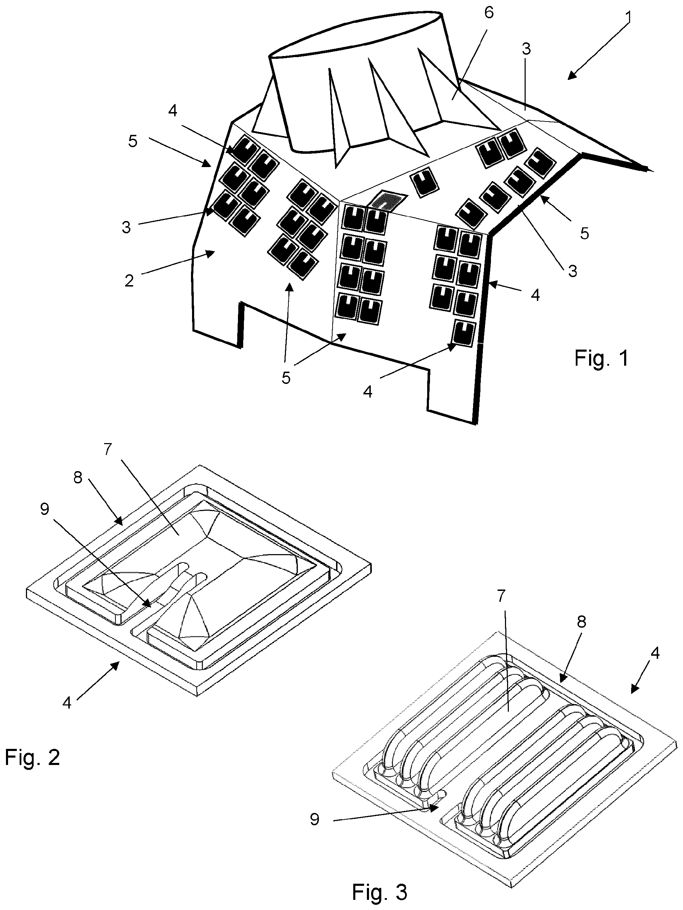

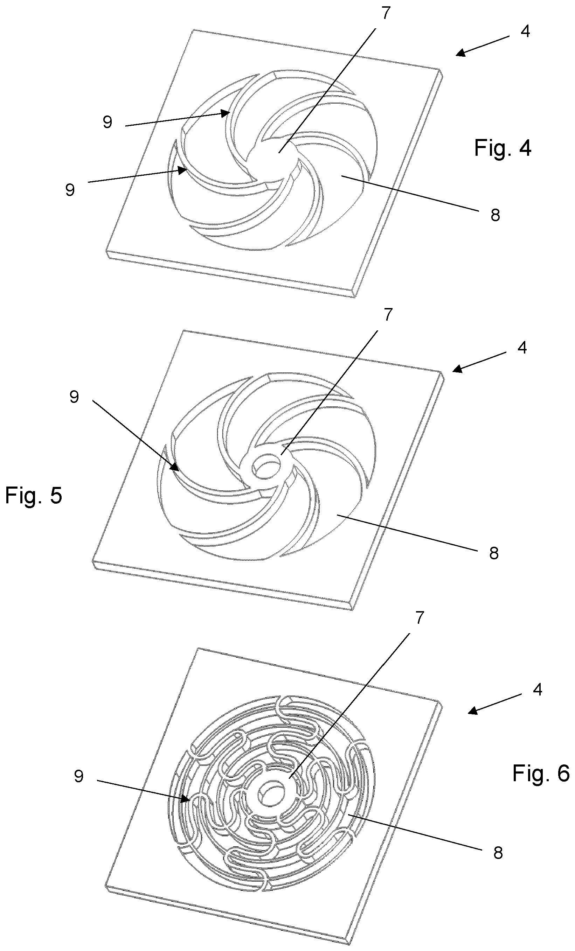

Die in Fig. 1 dargestellte Zeichnung zeigt eine dreidimensionale Ansicht eines erfindungsgemässen Strukturbauteils 1 für ein Kraftfahrzeug, wobei beispielhaft ein Federbeindom abgebildet ist. Das erfindungsgemässe Strukturbauteil 1 kann ebenso als lower dash, Spritzwand, bulkhead, Stirnwand oder Cockpitträger, Schweller, Längsträger, Innentürrahmen oder Unterboden ausgebildet sein. Beim erfindungsgemässen Strukturbauteil 1 handelt es sich vorzugsweise um eine dünnwandiges Strukturbauteil zugehörig zur Rohkarosserie (Body in white) oder Fahrgestell (Chassis), dass durch Druckgiessen hergestellt werden kann. Das erfindungsgemässe Strukturbauteil 1 zeichnet sich dadurch aus, dass das NVH-Verhalten im Vergleich zu bisher eingesetzten Strukturbauteilen aus Druckgussmaterial wesentlich verbessert ist. Das erfindungsgemässe Strukturbauteil 1 ist als einteiliges Druckgussbauteil ausgebildet und weist integral angeordnetes Metamaterial 2 auf. Vorzugsweise ist das Metamaterial 2 als mechanisches Metamaterial 2 ausgebildet. Der Grundkörper 3 ist vorzugsweise aus Druckgussvollmaterial ausgebildet und umgibt das Metamaterial 2. Das Metamaterial 2 besteht aus demselben Basismaterial wie der Grundkörper 3 gebildet ist. Das heisst, das erfindungsgemässe Strukturbauteil besteht vorzugsweise aus einem Leichtmetall, speziell bevorzugt aus einer Aluminium- oder Magnesiumlegierung. Das Metamaterial 2 weist Schwingungsdämpferelemente 4 auf. Die Schwingungsdämpferelemente 4 sind integral in das Metamaterial 2 und das Strukturbauteil 1 eingebracht und werden direkt beim Druckgiessen durch die spezifische Formgestaltung gebildet. Das Schwingungsdämpferelement 4 ist aus demselben Material wie der Grundkörper 3 gebildet, da es direkt beim Druckgiessen des Strukturbauteils 1 umgesetzt wird. Vorzugsweise sind die Schwingungsdämpferelemente 4 in Feldern 5 am Strukturbauteil angeordnet. Das heisst, dass in bestimmten Bereichen am Strukturbauteil 1 eine Ansammlung von periodisch angeordneten Schwingungsdämpferelementen 4 vorliegt, die das Metamaterial 2 bilden. Es ist vorteilhaft, wenn die Felder 5 an planaren Flächen des Strukturbauteils 1 vorzufinden sind. Auch die Anordnung von Schwingungsdämpferelemente 4 an Rippen 6 ist vorstellbar (nicht abgebildet). Das Schwingungsdämpferelement 4 weist ein Massenelement 7 auf. Das Massenelement 7 ist vorzugsweise auf die zu tilgenden Vibrationen am Bauteil ausgelegt. Vorzugsweise sollen Schwingungen im Bereich von 200-250 Hz getilgt werden, denn dies sind die Frequenzen, die vom Abrollen der Räder auf den Strassen erzeugt werden, die also bei allen Fahrzeugen auftreten. Das Massenelement 7 ist vorzugsweise zumindest teilweise von einem Luftspalt 8 umgeben. Dies ermöglicht das Schwingen des Massenelements 7 und dadurch das Ausgleichen der Vibrationen am Strukturbauteil 1. Der das Massenelement 7 umgebende Luftspalt 8 wird vorzugsweise von mindestens einem Federelement 9 unterbrochen. Das Federelement 9 verbindet das Massenelement 8 mit der Grundfläche 3 des Strukturbauteils 1. In Fig. 2 ist ein Schwingungsdämpferelement 4 abgebildet, das ein rechteckiges Massenelement 7 aufweist, das über ein Federelement 9 mit der Grundfläche 3 verbunden ist. Das Massenelement 7 ragt leicht über die Oberfläche des Grundkörpers 3 hinaus und ist flächig ausgebildet. Fig. 3 zeigt ein Schwingungsdämpferelement 4 das ein Massenelement 7 mit einer Rippenstruktur aufweist, das die Oberfläche des Grundkörpers 3 überragt. Dabei sind einzelne, hochkant gerichtete Rippen miteinander zu einer Rippenstruktur verbunden und diese werden von einem Luftspalt 8 umgeben. Vorzugsweise ist die Rippenstruktur über mindestens ein Federelement 9, das sich vorzugsweise parallel zu den Rippen erstreckt mit dem Grundkörper 3 verbunden. Fig. 4 zeigt eine weitere Ausführungsform eines Schwingungsdämpferelements 4, wobei im Zentrum ein rund ausgebildetes Massenelement 7 angeordnet ist, dass über spiralförmig verlaufende Federelemente 9 mit dem Grundkörper 3 verbunden ist. Alternativ kann das Massenelement 7 auch als Ring ausgebildet sein, wie in Fig. 5 dargestellt. In Fig. 6 wird eine weitere alternative Ausführungsform eines Schwingungsdämpferelements 4 aufgezeigt. Dort wird das ringförmige Massenelement 7 mit mäanderförmig verlaufenden Federelementen 9 mit dem Grundkörper 3 verbunden. Selbstverständlich sind weitere Ausführungen von Schwingungsdämpferelementen denkbar, wie die Formen auch frei untereinander kombinierbar sind. Als vorteilhaft hat sich gezeigt, wenn der Luftspalt 8 um das Massenelement 7 direkt beim Druckgiessen gebildet wird, wobei aber auch ein nachträgliches Einarbeiten des Luftspalts 8 um die Massenelemente 7 denkbar ist. Vorzugsweise kann dies durch Lasern oder Stanzen oder ein anderes abtragendes Verfahren umgesetzt werden. Wie der Luftspalt 8 in das Strukturbauteil eingebracht wird, ist auch abhängig von der Formgestaltung der Federelemente 9.

### Bezugszeichenliste

- 1: Strukturbauteil
- 2: Metamaterial
- 3: Grundkörper
- 4: Schwingungsdämpferelement
- 5: Felder
- 6: Rippe
- 7: Massenelement
- 8: Luftspalt
- 9: Federelement

## Patentansprüche

1. Strukturbauteil (1) eines Kraftfahrzeugs zur Verbesserung des NVH-Verhaltens, wobei das Strukturbauteil (1) ein Metamaterial (2) aufweist, **dadurch gekennzeichnet, dass** das Strukturbauteil (1) als Druckgussbauteil ausgebildet ist, wobei das Metamaterial (2) im Druckgussbauteil integriert ist.

2. Strukturbauteil (1) nach Anspruch 1, **dadurch gekennzeichnet, dass** das Strukturbauteil (1) einen Grundkörper (3) aus gegossenem Vollmaterial und integral anschliessende Bereiche aus Metamaterial (2) aufweist.

3. Strukturbauteil (1) nach einem der Ansprüche 1 oder 2, **dadurch gekennzeichnet, dass** das Metamaterial (2) aus demselben Basismaterial wie der Grundköper (3) gebildet ist.

4. Strukturbauteil (1) nach einem der Ansprüche 1 bis 3, **dadurch gekennzeichnet, dass** das Strukturbauteil (1) aus einem Leichtmetall ausgebildet ist.

5. Strukturbauteil (1) nach einem der Ansprüche 1 bis 4, **dadurch gekennzeichnet, dass** das Metamaterial (2) Schwingungsdämpferelemente (4) aufweist, wobei die Schwingungsdämpferelemente (4) integral im Metamaterial (2) und integral im Strukturbauteil (1) angeordnet sind.

6. Strukturbauteil (1) nach einem der Ansprüche 1 bis 5, **dadurch gekennzeichnet, dass** die Schwingungsdämpferelemente (4) aus demselben Basismaterial wie der Grundkörper (3) ist.

7. Strukturbauteil (1) nach einem der Ansprüche 5 oder 6, **dadurch gekennzeichnet, dass** die Schwingungsdämpferelemente (4) in Feldern (5) am Strukturbauteil (1) angeordnet sind.

8. Strukturbauteil (1) nach einem der Ansprüche 5 bis 7, **dadurch gekennzeichnet, dass** das Schwingungselement (4) ein Massenelement (7) aufweist.

9. Strukturbauteil (1) nach Anspruch 8 **dadurch gekennzeichnet, dass** ein Luftspalt (8) zumindest teilweise um das Massenelement (7) verläuft, wobei das Massenelement (7) über mindestens ein Federelement (9) mit dem Grundkörper (3) verbunden ist.

10. Strukturbauteil (1) nach einem der Ansprüche 8 oder 9, **dadurch gekennzeichnet, dass** das Massenelement (7) eine runde oder eckige Grundfläche aufweist.

11. Strukturbauteil (1) nach einem der Ansprüche 8 oder 9, **dadurch gekennzeichnet, dass** das Massenelement (7) als Rippenstruktur ausgebildet ist und die Rippenstruktur die Oberfläche des Grundkörpers überragt.

12. Strukturbauteil (1) nach einem der Ansprüche 1 bis 11, **dadurch gekennzeichnet, dass** das Strukturbauteil (1) als dünnwandiges Strukturbauteil zugehörig zur Rohkarosserie (Body in white) oder Fahrgestell (Chassis) ausgebildet ist, vorzugsweise als Federbeindom, lower dash, Spritzwand, bulkhead, Stirnwand oder Cockpitträger.

13. Verfahren zur Herstellung eines Strukturbauteils (1) nach einem der Ansprüche 1 bis 12, **dadurch gekennzeichnet, dass** das Strukturbauteil (1) im Druckgussverfahren hergestellt wird.

14. Verfahren zur Herstellung eines Strukturbauteils (1) nach Anspruch 13, **dadurch gekennzeichnet, dass** in das Druckgussstrukturbauteil nach dem Ausformen aus der Gussform die Luftspalten (8) zumindest teilweise um die Massenelemente (7) eingebracht wird.
